# EUROPEAN PATENT APPLICATION

(11) **EP 4 800 578 A1**
(43) Date of publication of application: **02.09.2026**
(21) Application number: 25160543.2
(22) Date of filing: 27.02.2025
(51) Int. Cl.: G06F 18/213, G06N 3/0455, G06V 10/40, G06V 20/64

(54) **TECHNIQUE FOR GENERATING A 3D FEATURE VOLUME FOR A PERCEPTION TASK**

(71) Applicant: Robert Bosch GmbH, 70442 Stuttgart (DE)
(72) Inventor: Leibe, Bastian, 52134 Herzogenrath (DE); Linder, Timm, 71032 Boeblingen (DE); Adrian, David, 70565 Stuttgart (DE); Yilmaz, Kadir, 52066 Aachen (DE); Abou Zeid, Karim, 52070 Aachen (DE)

(57) **Abstract**

A computer-implemented technique for outputting a 3D feature volume of a scene is provided. A method comprises a step of receiving (S102) multi-view 2D image data of a scene. Features are extracted (S105) at multiple scales of spatial resolution. At an input layer of a 3D backbone network (307), 3D point cloud data of the scene are received (S108). The 3D backbone network (307) comprises an encoder (309-E) and a decoder (309-D) with connections (410) at a plurality of scales of spatial resolution for extracting features from the 3D point cloud data. At multiple layers of the decoder (309-D) the extracted (S105) features are injected (S110) with corresponding scales of spatial resolution. A 3D feature volume of the scene based on the received (S108) 3D point cloud data and on the injected (S110) features is output (S112) at an output layer of the 3D backbone network (307).

## Description

The present invention relates to a technique for outputting a 3D feature volume of a scene, in particular comprising methods, a neural network (NN) system, a further system comprising the NN system, and a computer program product.

### State of the Art

State of the art vehicles, such as autonomous cars, as well as mobile robots, and/or mobile home automation appliances are equipped with multiple sensors, such as cameras, LiDAR sensors or radar sensors, providing a large amount of data, which need to be processed for performing 3D downstream perception tasks.

A common backbone for 3D downstream tasks is the Minkowski U-Net [7]. This architecture is based on the original U-Net [12] and uses sparse tensors to represent 3D data. The data in this case are 3D point clouds (with possible attached features such as color or intensity), which may stem from a 3D sensor such as a LiDAR sensor or an RGB-D camera, or they might be reconstructed from, e.g., a 3D room scan. The Minkowski U-Net has been used for many 3D tasks such as semantic segmentation, instance segmentation, panoptic segmentation, and object detection.

Segmentation is a (in particular point-wise 3D) task, where each point in the input point cloud is assigned a label, such as a class label or an instance label.

Detection is an object-wise task, where the goal is to detect (e.g., find a bounding box) and/or classify objects in the input point cloud. For autonomous driving datasets, the bounding boxes are usually represented as seven (7) degrees of freedom (7 DoF) boxes that are aligned with the floor plane, which include the 3D location, the dimensions, and the orientation of the object. In (e.g., indoor) robotics use-cases, the bounding boxes can also be represented by nine (9) degrees of freedom (9 DoF), namely including arbitrary rotation, not aligned with any plane.

Multi-modal feature fusion, i.e., combining features from different modalities, such as cameras and LiDAR sensors, has been most commonly explored in the context of 3D object detection. Especially on autonomous driving datasets, where a fixed ground plane is usually present, it is common to flatten the 3D data representation into a 2D bird's eye view (BEV) representation (either before or after feature extraction), and then fuse the features from the 2D image with the 2D BEV features. Prominent examples are BEVFusion [10], TransFusion [2], and TransFuser [6].

For segmentation tasks, the BEV representation is less well suited, since the output is a fine-grained point-wise prediction, making it essential to keep the 3D structure and resolution of the data.

Fusion approaches often relate points to pixels using calibrated cameras and employ a simple channel-wise feature concatenation to combine 3D features with their corresponding 2D features. Example of such approaches are 4D-Former [1], MSeg3D [9], and LCPS [14]. The differences between these methods are often in the exact details of architecture choices when it comes to the feature fusion part.

The state-of-the-art methods are often plagued by a sparsity of relevant training datasets. Moreover, the potential provided by acquiring data using a plurality of different sensors is not sufficiently exploited.

It is therefore an object of the present invention to provide a solution for improving perception tasks, in particular for autonomous driving, robotics, home automation, and/or 3D room planning. Alternatively or in addition, it is an object to provide a solution for exploiting multi-modality of sensor data and/or camera data, in particular for a perception task. Alternatively or in addition, an object is to enable precision results, in particular of neural network systems, for perception tasks based on 2D and 3D sensor data, in particular in case of a small number of domain-specific training datasets.

### Disclosure of the Invention

This object is solved by methods for outputting a 3D feature volume of a scene, by a neural network (NN) system, by a further system comprising the NN system, and by a computer program (and/or computer program product) according to the appended independent claims. Advantageous aspects, features and embodiments are described in the dependent claims and in the following description together with advantages.

In the following, the invention will be described with respect to the claimed method first. Features, advantages or alternative embodiments, mentioned with respect to the methods can be assigned to the other claimed objects (e.g. the computer program (product) or a NN system), and vice versa. In other words, the NN system, a further system comprising the NN system, or a computing device (e.g., comprising the NN system) can be improved with features described or claimed in the context of the methods, and vice versa. In this case, the functional features of the methods are embodied by structural units of the device or system and vice versa, respectively. The methods may refer to a software implementation, and the NN system, computing device and/or further system may refer to a hardware implementation (e.g. with a spatial physical structure) or a virtualization thereof. Generally, in computer science a software implementation and a corresponding hardware implementation (e.g. as an embedded system) are equivalent. Thus, for example, a method step for "storing" data may be performed with a storage unit and respective instructions to write data into the storage. For the sake of avoiding redundancy, although the NN system and/or computing device may also be used in the alternative embodiments described with reference to the methods, these embodiments are not explicitly described again for the NN system and/or the computing device. In principle, the respective NN system (claim and/or device claim) is configured to carry out the claimed methods.

As to a first method aspect, a (in particular computer-implemented) method for outputting a 3D feature volume of a scene is provided. The method comprises a step of receiving multi-view two-dimensional (2D) image data (also: multi-view 2D images) of a scene. The method further comprises a step of extracting features at multiple scales of spatial resolution from the received multi-view 2D image data. The method further comprises a step of receiving, 3D point cloud data of the scene at an input layer of a three-dimensional (3D) backbone network. The 3D backbone network comprises an encoder and a decoder with connections at a plurality of scales of spatial resolution for extracting features from the 3D point cloud data. The method further comprises a step of injecting the extracted features at multiple (or at all) layers of the decoder. The extracted features are injected with corresponding (and/or matching) scales of spatial resolution. The method further comprises a step of outputting a 3D feature volume of the scene based on the received 3D point cloud data and based on the injected features. The output is provided at an output layer of the 3D backbone network.

By the technique, knowledge from a large-scale general purpose 2D vision foundation model may be integrated into a coherent 3D representation, namely 3D point cloud data. This is in particular crucial in scenarios with smaller domain-specific training datasets or when the resolution of 3D data alone is insufficient relative to the size of objects in the scene. The inventive technique allows for fusing this information at the (in particular 3D) backbone level.

Using the combination of 2D and 3D sensor data, which are fused at the backbone-level, allows for smaller domain-specific training datasets than conventionally.

The technique allows for exploiting spatial (and/or spatio-temporal) relationships. E.g., object-based and/or semantics-based navigation (such as for autonomous driving) can be enabled. Alternatively or in addition, 3D scene based room planning (e.g., for designing and constructing a manufacturing site and/or a home automation environment) can be facilitated.

Autonomous driving may comprise any one of the Level 1 (driver assistance), Level 2 (partial automation), Level 3 (conditional automation), Level 4 (high automation), and/or Level 5 (full automation) according to the Society of Automotive Engineers classification system.

Alternatively or in addition, the technique allows for multi-modality (in particular 3D) object detection and/or segmentation by combining 2D camera data with sparse 3D tensor data (and/or 3D point cloud data).

The scene (also: environment) may be an outdoor scene, such as a traffic scene or an outdoor factory site. Alternatively or in addition, the scene may be an indoor scene, such as a scene comprising a manufacturing site or a home automation environment.

Multi-scale (also: multiple scale) may refer to a scale (also: granularity, and/or level) of a spatial resolution. E.g., a low scale of resolution may comprise less information as to a content of a 2D or 3D patch than al 2D or 3D patch (e.g., for the same patch size in powers of length units, such as an area of a predetermined number of mm^2 or a volume of a predetermined number of mm^3), which has a high scale of resolution.

Extracting features may refer to extracting 2D features from the received 2D image data. Alternatively or in addition, extracting features may refer to extracting a (in particular 2D) feature map. A feature map may be a data structure or matrix resulting from the application of various operations (such as convolution or pooling) to the 2D image data. Feature maps can represent learned features or patterns, such as edges, color gradients, textures, and/or - in particular the more the network deepens semantic image content - shapes, and/or objects detected at different spatial locations in the image. Alternatively or in addition, a 2D feature map may assign one or more features per pixel of the 2D image data.

Extracting features at multiple scales may refer to extracting features at multiple sizes of patches of the multi-view 2D image data and/or at multiple granularities per patch.

The multi-view 2D image data may be configured to cover the scene, in particular from multiple angles. In one embodiment, the multi-view 2D image data are obtained from multiple cameras (e.g., for real time applications, such as autonomous driving and/or movements of a mobile robot and/or mobile home automation appliance). Each camera may be stationary (in particular relative to the scene) or movable (in particular relative to the scene). In an alternative embodiment, the multi-view 2D image data are obtained from one camera, which is moved (e.g., around a vertical axis) to cover the scene.

A movable camera may be stationary with respect to and/or attached to an autonomous vehicle, mobile robot, and/or mobile home automation appliance.

The 3D point cloud data may comprise distance information. Alternatively or in addition, the 3D point cloud data may comprise information specific to a modality, by which the 3D point cloud data were acquired. E.g., color and/or opacity of RGB 3D-cameras, and/or intensity for LiDAR sensors.

The encoder of the 3D backbone network may successively downsample the 3D point cloud data and/or may successively reduce the spatial resolution of the 3D point cloud data.

The decoder of the 3D backbone network may successively upsample the output of the encoder, and/or may successively increase the spatial resolution of the output of the encoder.

The 3D backbone network may be configured for generating the 3D feature volume of the scene based at least on the received 3D point cloud data, and in particular at least during a training phase based on the received multi-view 2D image data of the scene.

In some embodiments, a camera coverage (and/or a coverage of the scene by the multi-view 2D image data) may be incomplete during a training phase of a NN system performing the inventive method. Thereby, the NN system may be robust against missing multi-view 2D image data, thus enabling to generate a 3D feature volume of the scene based solely on 3D point cloud data in an inference phase (and/or after training).

The features extracted from the multi-view 2D image data may, for a chosen scale of the spatial resolution, be injected to a (in particular 3D) layer of the decoder (also: decoder layer) with the corresponding scale of spatial resolution.

Injecting may, e.g., comprise concatenating an output of a (in particular 3D) encoder layer, which is skip connected to the (in particular 3D) decoder layer, with the extracted (in particular 2D) features. Both, the output of the encoder layer and the injected feature, types of concatenated data may be associated with corresponding spatial resolutions.

Alternatively or in addition, the injection step may comprise performing an (e.g., element-wise) addition, a (e.g., element-wise) multiplication, and/or using zeros for invisible points.

The output of the decoder layer may comprise 3D feature information, in particular a 3D feature volume (briefly also: a feature volume), at the scale of spatial resolution associated with the decoder layer.

Injecting extracted features may comprise concatenating features from the 3D point cloud data with data from a (in particular multi-view and/or multi-scale) 2D feature map.

The injecting (also: 2D-to-3D feature fusion), in particular at several upsampling steps of the decoder of the 3D backbone network, in particular at all such upsamling steps, may comprise projecting voxel onto pixel and/or averaging over all points in the voxel to obtain 2D features.

A scale (also: scale level, briefly also: level; and/or granularity) of spatial resolution may be specified by a scale index. E.g., the scale index may count the scale of spatial resolution from 1 for the highest spatial resolution to N for the lowest spatial resolution, or vice versa, for N different scales of spatial resolution. Alternatively or in addition, a numerical value of the corresponding scale of spatial resolution of the (in particular 3D) decoder layer may differ from the numerical value of the scale of spatial resolution of the features extracted from the multi-view 2D image data.

A corresponding scale of spatial resolution may be determined according to the scale index, and/or based on a layer index of the decoder (and/or the encoder) of the 3D backbone network. Alternatively or in addition, a feature extraction module and/or a multi-scale 2D feature extractor network (e.g., the ViT-Adapter) may be configured to provide a number of different spatial resolutions that depends on the number of layers of the decoder (and/or the encoder) of the 3D backbone network. E.g., if the extracted features are injected at every upsampling step, the number of scales of spatial resolution extracted from the multi-view 2D image data may correspond to the number of upsampling steps. Alternatively or in addition, if the extracted features are injected at multiple upsampling steps corresponding to a subset of the decoder layers, the number of scales of spatial resolution extracted from the multi-view 2D image data may correspond to the number of decoder layers in that subset.

The injecting with corresponding (and/or matching) scales (and/or corresponding scale indices) of spatial resolution (also: multi-scale 2D-to-3D feature fusion) may comprise fusing the lowest resolution 2D feature map with the lowest resolution 3D feature volume obtained from the 3D backbone network layers. Alternatively or in addition, the highest resolution 2D feature map may be fused with the highest resolution 3D feature volume obtained from the 3D backbone network layers, and so on.

The 3D feature volume of the scene may be determined based on the received 3D point cloud data of the scene and further based on the injected (in particular at multiple decoder layers of the 3D backbone network) features that were extracted from the multi-view 2D image data. According to some embodiments, after the 3D backbone network is trained, it is also possible to determine a 3D feature volume of the scene based only on the received 3D point cloud data of the scene.

The 3D feature volume (also: voxel grid and/or enriched 3D model) may comprise zero, one or more features assigned per voxel, and/or per 3D unit volume.

Any (e.g., 3D or 2D) feature may comprise a visual property, such as color, opacity, and/or intensity, and/or a classification, such as an object class, a segmentation class, and/or some other abstract information, represented in numerical form.

The 3D feature volume may be used as input for a downstream perception task, such as object detection and/or scene segmentation, semantic segmentation, instance segmentation, and/or panoptic segmentation. By the downstream perception task, autonomous driving and/or autonomous robotics (e.g., at manufacturing sites, and/or in home automation) may be enabled. Alternatively or in addition, 3D room planning may be performed using the downstream perception task. 3D room planning may, e.g., comprise planning a floorplan for a manufacturing site, where stationary objects (e.g., furniture and/or machines) are installed, and how mobile robots can move across the manufacturing site as needed, in particular without being hindered in their movements (including, e.g., movements of robot arms and/or changes in orientation of the robot) by the stationary objects.

In some embodiments, the downstream perception task may be configured for real-time applications, such as autonomous driving and/or maneuvering of mobile robots and/or mobile home automation appliances. In such embodiments, also the technique for outputting the 3D feature volume of the scene may need to be performed in real-time.

In other embodiments, such as for 3D room planning, the downstream perception task need not be configured for real-time application. In such embodiments, also the technique for outputting the 3D feature volume of the scene need not be performed in real-time.

Extracting features at multiple scales of spatial resolution from the received multi-view 2D image data may comprise obtaining features (e.g., at a single scale, in particular of highest resolution) comprised in the received multi-view 2D image data by means of a 2D vision foundation model. Extracting features at multiple scales of spatial resolution from the received multi-view 2D image data may further comprise extracting the obtained features at multiple (in particular also lower than first obtained by the 2D vision foundation model) scales of spatial resolution by means of a multi-scale 2D feature extractor network.

Extracting features at multiple scales from the multi-view 2D image data may be performed in two steps, and/or using two conventionally known models and/or networks. Thereby, the feature extraction from the 2D image data may be performed efficiently, and/or the different model and/or network components may be trained separately according to intended use cases, such as for object recognition for autonomous driving.

The 2D vision foundation model may provide 2D feature maps (e.g., at a predetermined scale, in particular corresponding to the highest scale among the ensuing multiple scales) as output.

The 2D vision foundation model (and/or its weights) may be frozen during training for performing the inventive technique (e.g., as opposed to during it very own, and/or generic, training, during which the 3D vision foundation model is not frozen). Alternatively or in addition, the 2D vision foundation model need not be specifically trained for the technique. By not specifically training the 2D vision foundation model, and/or by keeping it (and/or its weights) frozen during training, overfitting of the 2D vision foundation model (e.g., as a general-purpose foundation model) may be avoided. Alternatively or in addition, training a neural network (NN) system for performing the inventive technique may be sped up by not training the component of the 2D vision foundation model.

The 2D vision foundation model may comprise a model from the DINO series (also: DINO model), such as DINOv2 [11]. Alternatively or in addition, the 2D vision foundation model may comprise a SigLIP model.

The DINO (Distillation with No Labels) model may be a vision foundation model. It may be characterized by its use of self-supervised learning to pretrain vision transformers (ViTs) [22] or convolutional neural networks (CNNs).

The SigLIP (Sigmoid Loss for Language Image Pre-Training) model [16] may use a simple pairwise sigmoid loss in CLIP (Contrastive Language-Image PreTraining). CLIP may be a NN trained on a variety of (e.g., image, text) pairs.

The multi-scale 2D feature extractor network may extract 2D feature maps from the output of the 2D vision foundation model at multiple scales (also: multiple levels) of spatial resolution (and/or granularity).

The multi-scale 2D feature extractor network may be trainable, and/or may be trained for optimizing the performance of the technique.

The multi-scale 2D feature extractor network may comprise a Vision Transformer (ViT) adapter (briefly: ViT-Adapter) [5].

A ViT may be a model that focuses on capturing long-range dependencies in images by attending to all parts of the image globally. In particular, the ViT may be a model to analyze images by treating them as sequences of patches, utilizing attention mechanisms to learn robust features that capture relationships across the entire image.

A ViT-Adapter may allow for extracting multi-scale 2D features from a ViT, e.g., whereas the ViT itself outputs only features at a single scale. A ViT-Adapter may further allow for fine-tuning the ViT without modifying the original learned ViT weights. In this variant, the ViT model is frozen, and the ViT-Adapter has learnable weights. This is advantageous when fine-tuning on small amounts of data, in order to preserve generalization (and/or generalizability capacities of the ViT).

The encoder and/or the decoder of the 3D backbone network may be sparse. Alternatively or in addition, the connections at multiple levels of spatial resolution between the encoder and the decoder may comprise skip connections. Further alternatively or in addition, the 3D backbone network may comprise a U-Net [12], in particular a Minkowski U-Net [7], and/or a Point Transformer [20], [21].

The (in particular sparse) encoder and/or decoder of the 3D backbone network may be trained by unsupervised training, and/or training data without ground truth. Thereby, training of the 3D backbone network in the absence of large databases of annotated data can be facilitated.

The connections between different layers of the encoder and different layers of the decoder may comprise skip connections (in particular for identical encoder layer index and decoder layer index). Thereby, spatial information can be retained, in particular at the same level of downsampling (at the encoder) and upsampling (at the decoder).

By the encoder and/or decoder of the 3D backbone network being sparse in some embodiments, memory can be saved, which is particularly relevant for 3D representations that conventionally consume a lot more memory than 2D image representations. Alternatively or in addition, a sparse encoder and/or sparse decoder of the 3D backbone network suitably reflects the fact that the 3D scene is space, e.g., with a lot of "empty air" in a room or outdoor space.

The method may further comprise a step of providing the 3D feature volume to a (in particular 3D) downstream perception task model. The method may further comprise a step of performing the downstream perception task in relation to the provided 3D feature volume. The method may further comprise a step of outputting the result of the performed downstream perception task.

The downstream perception task result may be used for autonomous driving, robotics, and/or home automation. E.g., bounding boxes may be provided as at least 7 degrees of freedom (DoF), in particular aligned with a floor plane and/or comprising a 3D location, dimensions, and/or orientation. The bounding box and/or the at least 7 DoF may, e.g., serve to identify motionless or moving obstacles, such as walls, traffic signs, parked vehicles and/or moving vehicle in a traffic scene, and/or stationary machines, furniture, moving persons, and/or further moving robots in a manufacturing scene or home automation scene.

7 DoF may be commonly used in autonomous driving, where it may be assumed that vehicles (e.g., cars) are located on a (at least locally and/or approximately) flat plane. Alternatively or in addition, 9 DoF (which in particular adds roll and pitch to yaw orientation) can be relevant in household (and/or home automation) and/or industrial (and/or manufacturing) scenarios, where objects (e.g., robots) can have an arbitrary orientation with respect to a ground plane.

Alternatively or in addition, the downstream perception task result may be used for 3D room planning, such as for a manufacturing site and/or a home automation environment.

The downstream perception task may comprise an object detection and/or a segmentation task. Optionally, the segmentation may comprise semantic segmentation, instance segmentation, and/or panoptic segmentation.

Object detection may comprise providing bounding boxes and/or classifying objects (e.g., a traffic sign or furniture versus moving vehicles or moving robots).

Semantic segmentation may relate to assigning a class label to every pixel in an image (and/or voxel in the image volume), treating all instances of a particular object class as a single entity (e.g., detecting persons in an image, without differentiating between the different persons). Instance segmentation may relate to assigning a class label and a unique instance ID to every pixel (and/or voxel), differentiating individual objects even within the same class (e.g., detecting a specific person in the person class). Panoptic segmentation may be a even more detailed representation of the scene and/or image. Alternatively or in addition, panoptic segmentation combines semantic segmentation and instance segmentation, aiming for complete and unified scene understanding of the image (e.g., detecting and differentiating between persons and cars - at instance level - in a street image with detected background as street or sky).

Alternatively or in addition, semantic segmentation may comprise classifying a type of object (e.g., a piece of furniture, pillar and/or a traffic sign), instance segmentation may comprise classifying a type of object plus distinguishing an instance of an object (e.g., an instance of multiple identical looking pieces of furniture, pillar and/or traffic signs), and/or panoptic segmentation may comprise instance segmentation plus classifying objects not readily captured by a bounding box (such as road surface, floor, walls, and/or a river).

The 3D point cloud data may be obtained by means of at least one a LiDAR sensor, at least one radar sensor, at least one RGB-D camera, stereoscopic imaging (and/or at least one stereoscopic sensor), a computer-aided design (CAD) model, and/or thermal imaging (and/or at least one thermal sensor).

The 3D point cloud data may be acquired at the same time as the multi-view 2D image data. E.g., by using an RGB-D camera (also: RGB 3D camera), the multi-view 2D image data may be provided, and the 3D point cloud data may be derived from the same camera image data. As an alternative example, an autonomously driving vehicle may be equipped with multiple cameras, LiDAR sensors, and/or radar sensors. The traffic scene may be continuously captured using all, or at least a subset, of the cameras and further (e.g., LiDAR and/or radar) sensors.

Alternatively or in addition, the multi-view 3D image data and the 3D point cloud data may be acquired at different points in time. For example, for moving a robot through a static manufacturing scene, the 3D feature volume of the scene need not be based on instantaneously acquired image data and/or other sensor data. Alternatively or in addition, 3D room planning does not necessarily require multi-view 3D image data and/or the 3D point cloud data captured close to each other in time.

The multi-view 2D image data may comprise 2D images taken at different camera orientations, in particular using a moving camera to change camera orientations. Alternatively or in addition, the multi-view 2D image data may comprise 2D images taken by multiple cameras at different locations and/or with different orientations.

A single camera, which is moved to change the orientation with respect to the scene (e.g., to perform a 3D scan), has the advantage of a minimal need for technical equipment. At the same time, using a single camera can lead to delays, which may not be suitable when using the technique for real-time applications, such as autonomous driving.

Alternatively or in addition, using multiple cameras at different locations (e.g., to perform a 3D room scan, such as by placing cameras along different corners of an indoor room or different corners of a traffic intersection, and/or placing multiple cameras with different orientations at an autonomous vehicle, mobile robot, and/or mobile home automation appliance), may facilitate real-time applications, such as scene recognition for autonomous driving, while coming at a higher cost in terms of the need for technical equipment, installation and maintenance.

A camera calibration of one or more cameras, by which the received multi-view 2D image data and optionally the 3D point cloud are acquired, may be known. With other words, the respective camera's calibration parameters are known and may be processed algorithmically, in particular for fusing the 2D image data and the 3D point cloud.

By the camera calibration parameters being known, it is further possible to fuse and/or identify features extracted from the camera images and features encoded in the 3D point cloud data.

Calibration in relation to a sensor (e.g., camera, LiDAR sensor, radar sensor, stereoscopic sensor, and/or thermal sensor) may generally refer to the process of measuring the correspondence between the output of the sensor and the data actually measured by the sensor.

Calibration parameters for a camera may comprise extrinsic camera parameters (briefly: extrinsic parameters) and/or intrinsic camera parameters (briefly: intrinsic parameters). The extrinsic parameters may represent the location of the camera in the (in particular 3D) scene. Alternatively or in addition, the intrinsic parameters may represent an optical center, focal length of the camera, and/or a projection function according to some lens-specific projection model (for instance, pinhole model or equidistant fisheye model), optionally including one or multiple distortion coefficients that may help to deal with physical imperfections of the optical lens.

World points may be transformed to camera coordinates using the extrinsic parameters.

The known camera calibration may in particular comprise the calibration with respect to the extrinsic parameters being known (also denoted as: extrinsic calibration) and/or intrinsic parameters being known. Intrinsic and/or extrinsic calibration may, e.g., be obtained by using calibration boards and software (e.g., if all cameras and/or further sensors are static and/or rigidly mounted with respect to each other). Alternatively or in addition, perspective-and-point (PnP) approaches, RANSAC, e.g. with manual 2D-3D point matching, and/or photogrammetry to find 2D-3D correspondences may be used.

Alternatively or in addition, the camera calibration may be performed (and/or be known) relative to the sensors, by which the 3D point cloud data are acquired (e.g., LiDAR sensors and/or radar sensors). Further alternatively or in addition, the camera calibration may comprise data of the one or more 2D cameras being assigned and/or registered to the 3D point cloud data, and/or the sensors providing the 3D point cloud data, such as LiDAR sensors, radar sensors, thermal sensors, and/or stereoscopic sensors.

Sensor parameters for a LiDAR sensor may comprise a laser wavelength, detection range, Field of View (FOV), angular resolution, point rate, and/or a number of beams. Alternatively or in addition, the sensor parameters for a LiDAR sensor may comprise a ranging accuracy, safety level, output parameters, IP rating, power, supply voltage, laser emission mode (e.g., mechanical/solid-state), and/or lifespan.

Sensor parameters for a radar sensor may comprise frequency band and/or modulation.

Sensor parameters for a thermal sensor may comprise resolution, pixel pitch, fill factor, magnification, FoV, and/or frame rate.

Sensor parameters for a stereoscopic sensor may comprise eye separation (in particular the distance between two perspectives of images of the scene, with the two perspectives denoted as eyes) and/or focal length (in particular for focusing the eyes at the same point the focal length away).

The method may be performed by a NN system.

The method may be performed locally on a computing device (e.g., the NN system may be realized by the computing device). Alternatively or in addition, at least some steps of the method may be performed in a computing cloud (e.g., at least part of the NN system may be embodied by the computing cloud).

Locally performing the method on a computing device may be particularly suitable for real-time applications, such as autonomous driving.

An advantage of a cloud-based performance of the method is the availability of a vast amount of computing resources. E.g., 3D room planning, such as planning a manufacturing site and/or a home automation system, may be performed in a cloud. By the 3D room planning, e.g., future movements of robots may be optimized.

The method may be used for training the 3D backbone network for determining a 3D feature volume of the scene.

Training the 3D backbone network by the 2D-to-3D feature fusion can improve the performance of the 3D backbone network alone in a later inference phase, such as when no multi-view 2D image data become available in a timely manner.

Using the 2D-to-3D feature fusion for training the 3D backbone network allows for unsupervised training and/or training without a ground truth.

Along with the 3D backbone network, the multi-scale 2D feature extractor network may be trained.

The multi-scale 2D feature extractor network (e.g. ViT-Adapter) may be trained using standard back-propagation techniques, e.g., in a fully supervised manner (and/or on the downstream perception task), with the original 2D vision foundation model's weights fully or at least partly frozen to prevent overfitting to smaller amounts of data. Data augmentation techniques (e.g., random flipping, random color augmentations), optimization methods (e.g., AdamW), and/or different learning rates may be utilized.

As to a second method aspect, a (in particular computer-implemented) method for outputting a 3D feature volume of a scene is provided. The method comprises a step of receiving 3D point cloud data of a scene at an input layer of a 3D backbone network, which has been trained according to the method of the first method aspect. The method further comprises a step of outputting a 3D feature volume of the scene based on the received 3D point cloud data. The 3D feature volume of the scene is output at an output layer of the 3D backbone network.

The method according to the second method aspect may further comprise the steps of providing the 3D feature volume to a (e.g., 3D) downstream perception task model, performing the downstream perception task, and outputting the result as described in the context of the first method aspect.

The method according to the second method aspect may comprise the same steps, and/or same features, as described in the context of the first method aspect, in particular except for not receiving multi-view 2D image data of the scene and thus not extracting features therefrom. Said differently, the method according to the second method aspect may agree with the method according to the first method aspect except for the 3D feature volume being solely determined based on 3D point cloud data of the scene and/or without any feature knowledge from multi-view 2D image data of the scene.

As to a device aspect, a NN system for outputting a 3D feature volume of a scene is provided. The NN system comprises a first interface, which is configured for receiving multi-view 2D image data of a scene. The NN system further comprises a feature extraction module, which is configured for extracting features at multiple scales of spatial resolution from the received multi-view 2D image data. The NN system further comprises a 3D backbone network. The 3D backbone network comprises an input layer, which is configured for receiving 3D point cloud data of the scene. The 3D backbone network further comprises an encoder (e.g., performing a predetermined number of downsampling steps) and a decoder (e.g., performing a predetermined number of upsampling steps, in particular with identical number of downsampling and upsampling steps) with (e.g., skip) connections at a plurality of scales of spatial resolution for extracting features from the 3D point cloud data. Multiple layers of the decoder are configured for injecting the extracted features of the multi-view 2D image data with corresponding scales of spatial resolution. The 3D backbone network further comprises an output layer, which is configured for outputting a 3D feature volume of the scene based on the received 3D point cloud data and injected features.

The NN system may be embodied by a computing device and/or may be realized in a computing cloud.

The NN system may be configured to perform any one of the steps, or comprise any one of the features, described in the context of the method aspects.

As to a system aspect, a system for outputting a 3D feature volume of a scene is provided. The system comprises at least one optical sensor (in particular at least one camera) which is configured for acquiring multi-view 2D image data of a scene. The system further comprises at least one sensor (e.g. a LiDAR sensor), which is configured for acquiring 3D point cloud data of the scene. The system further comprises a NN system according to the device aspect. The first interface of the NN system is configured for receiving the multi-view 2D image data from the at least one optical sensor. The input layer of the 3D backbone network of the NN system is configured for receiving the 3D point cloud data.

In some embodiments, the at least one sensor configured for acquiring the 3D point cloud data may be identical to the at least one optical sensor. In this case, the 3D point cloud data may be derived from the optical sensor data.

The system may be configured to perform any one of the steps, or comprise any one of the features, described in the context of the method aspects.

As to a further aspect, a computer program product is provided comprising program elements, which induce a NN system (e.g., according to the device aspect) to carry out the steps of the method for outputting a 3D feature volume of a scene according to the first and/or second method aspect, when the program elements are loaded into a memory of the NN system.

As to a still further aspect, a computer-readable medium is provided on which program elements are stored that can be read and executed by a NN system (e.g., according to the device aspect), in order to perform steps of the method for outputting a 3D feature volume of a scene according to the first and/or second method aspect, when the program elements are executed by the NN system.

The properties, features and advantages of this invention described above, as well as the manner they are achieved, become clearer and more understandable in the light of the following description and embodiments, which will be described in more detail in the context of the drawings.

This following description does not limit the invention on the contained embodiments. Same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### Brief description of the drawings

- Fig. 1: is a flow chart of an exemplary method for outputting a 3D feature volume of a scene according to a preferred embodiment of the present invention;
- Fig. 2: is a flow chart of a further exemplary method for outputting a 3D feature volume of a scene according to a further preferred embodiment of the present invention, with the further exemplary method using a 3D backbone network that was trained according to the method of Fig. 1;
- Fig. 3: is an overview of the structure and architecture of a neural network (NN) system according to a preferred embodiment of the present invention, which may be configured to perform the method of Fig. 1, and optionally also the method of Fig. 2; and
- Fig. 4: schematically illustrates an example of applying the method, e.g., as shown in Fig. 1, to a NN system, such as schematically illustrated in Fig. 3.

### Detailed description

Any reference signs in the claims should not be construed as limiting the scope.

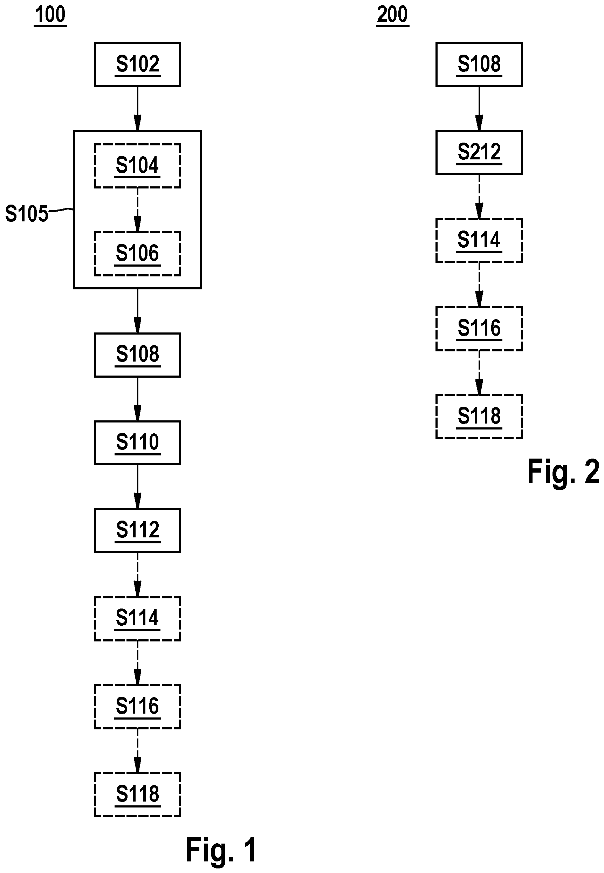

Fig. 1 schematically illustrates an exemplary flowchart for a (in particular computer-implemented) method 100 for outputting a 3D feature volume of a scene. The method is generally referred to by the reference sign 100.

The method 100 comprises a step S102 of receiving multi-view two-dimensional (2D) image data of a scene. The method 100 further comprises a step S105 of extracting features at multiple scales of spatial resolution from the received S102 multi-view 2D image data. The step S105 of extracting features at multiple scales of spatial resolution may comprise a sub-step S104 of obtaining features comprised in the received S102 multi-view 2D image data by means of a 2D vision foundation model. The step S105 may further comprise a sub-step S106 of extracting the obtained S104 features at multiple scales of spatial resolution by means of a multi-scale 2D feature extractor network.

The method 100 further comprises a step of S108 of receiving 3D point cloud data of the scene at an input layer of a three-dimensional (3D) backbone network. The 3D backbone network comprises an encoder and a decoder with connections at a plurality of scales of spatial resolution for extracting features from the 3D point cloud data. The method 100 further comprises a step S110 of injecting the extracted S105 features at multiple decoder layers and with corresponding scales of spatial resolution. The method 100 further comprises a step S112 of outputting a 3D feature volume of the scene based on the received S108 3D point cloud data and on the injected S110 features. The output S112 is provided at an output layer of the 3D backbone network.

Optionally, the method 100 comprises a step S114 of providing the 3D feature volume to a (in particular 3D) downstream perception task model. The method 100 may further comprise a step S116 of performing the downstream perception task in relation to the provided S114 3D feature volume. The method 100 may further comprise a step of outputting S118 the result of the performed S116 downstream perception task.

The method 100 may be used for training the 3D backbone network for 3D feature volume determining.

Fig. 2 schematically illustrates a further exemplary flowchart for a (in particular computer-implemented) method 200 for outputting a 3D feature volume of a scene. The method is generally referred to by the reference sign 200.

The method 200 comprises a step S108 of receiving 3D point cloud data of a scene at an input layer of a 3D backbone network, which was trained according to the method 100. The method 200 further comprises a step S212 of outputting a 3D feature volume of the scene based on the received S108 3D point cloud data. The 3D feature volume is output S212 at an output layer of the 3D backbone network.

The method 200 may further comprise, analogously to the method 100, a step S114 of providing the 3D feature volume to a (in particular 3D) downstream perception task model, a step S116 of performing the downstream perception task in relation to the provided S114 3D feature volume, and/or a step S118 of outputting the result of the performed S116 downstream perception task. Alternatively or in addition, the method 200 may make use of the fact that the 3D backbone network was trained using the method 100, enabling it to determine a 3D feature volume of the scene solely based on the 3D point cloud data of the scene and/or without a need for multi-view 2D image data of the scene.

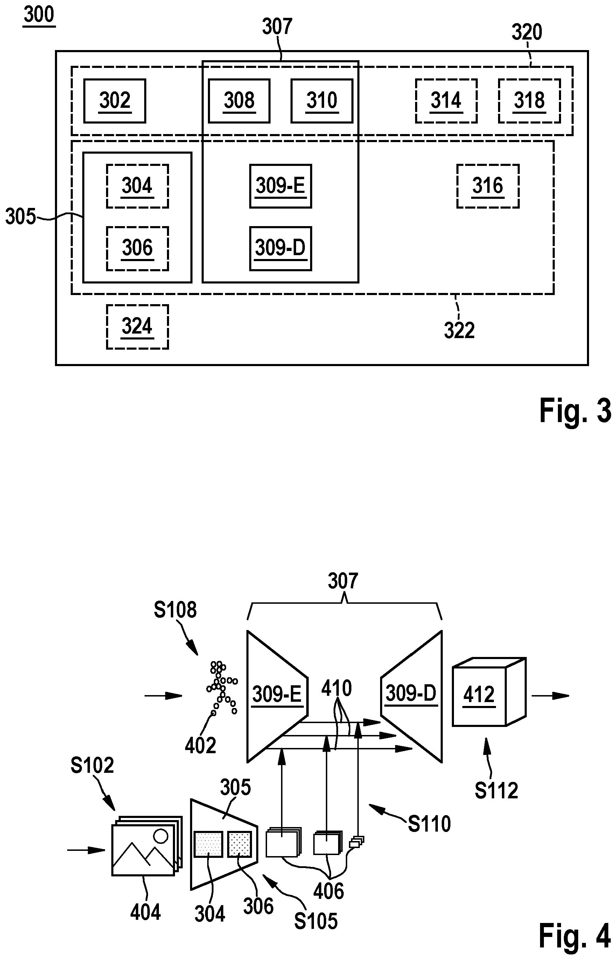

Fig. 3 schematically illustrates an exemplary architecture of a neural network (NN) system for outputting a 3D feature volume of a scene. The NN system is generally referred to by the reference sign 300.

The NN system 300 comprises a first interface 302, which is configured for receiving multi-view 2D image data of a scene. The NN system 300 further comprises a feature extraction module 305, which is configured for extracting features at multiple scales of spatial resolution from the received multi-view 2D image data. The feature extraction module 305 may comprise a 2D vision foundation model 304, which is configured for obtaining features comprised in the received S102 multi-view 2D image data. The feature extraction module 305 may further comprise a multi-scale 2D feature extractor network 306, which is configured for extracting the obtained features at multiple scales of spatial resolution.

The NN system 300 further comprises a 3D backbone network 307. The 3D backbone network 307 comprises an input layer 308, which is configured for receiving 3D point cloud data of the scene. The 3D backbone network 307 further comprises an encoder 309-E and a decoder 309-D with connections at a plurality of scales of spatial resolution for extracting features from the 3D point cloud data. Multiple layers of the decoder 309-D (also: multiple decoder layers) are configured for receiving injected extracted features of the multi-view 2D image data with corresponding scales of spatial resolution. The 3D backbone network 307 further comprises an output layer 310, which is configured for outputting a 3D feature volume of the scene based on the received 3D point cloud data and injected features.

The NN system 300 may further comprise an input interface 314 of a (in particular 3D) downstream perception task model 316. The input interface 314 may be configured for receiving the 3D feature volume. The downstream perception task model 316 may be configured for performing the downstream perception task in relation to the provided 3D feature volume. The NN system 300 may further comprise an output interface 318 of the downstream perception task model 316. The output interface 318 may be configured for outputting the result of the performed downstream perception task.

The NN system 300 may comprise an input-output interface 320. The input-output interface 320 may embody the first interface 302, the input layer 308, the output layer 310, the optional input interface 314, and/or the optional output interface 318.

The NN system 300 may further comprise a processor 322. The processor may embody the encoder 309-E and decoder 309-D, the feature extraction module 305, the optional 2D vision foundation model 304, the optional multi-scale 2D feature extractor network 306, and/or the optional downstream perception task model 316.

The NN system 300 may further comprise memory 324. The memory 324 may be configured for storing program code for performing the method 100, and optionally the method 200. Alternatively or in addition, the memory 324 may be configured for storing intermediate results and/or the determined 3D feature volume of the scene.

The NN system 300 may be configured for performing the method 100, and optionally the method 200.

The NN system 300 may be embodied by a computing device. Alternatively or in addition, the NN system 300 may be realized (at least partially) by a computing cloud.

A (e.g., further) system for outputting a 3D feature volume of a scene comprises at least one optical sensor (in particular at least one camera) which is configured for acquiring multi-view 2D image data of a scene. The (e.g., further) system further comprises at least one sensor, which is configured for acquiring 3D point cloud data of the scene. The (e.g., further) system still further comprises a NN system 300. The first interface 302 is configured for receiving the multi-view 2D image data from the at least one optical sensor, and the input layer 308 is configured for receiving the 3D point cloud data.

The (e.g., further) system may be configured for performing the method 100, and optionally the method 200.

The inventive technique (e.g., comprising the methods 100; 200, NN system 300, and/or the, in particular further, system) performs 2D-to-3D feature fusion at every (or at least at multiple) up-sampling step(s) in the decoder 309-E of the 3D backbone network 307. To accomplish this, multi-scale 2D feature maps generated by a multi-scale 2D feature extractor network (e.g., a ViT-Adapter) 306, using techniques described in [5], may be used. The first up-sampling step in the decoder 309-D utilizes the lowest resolution 2D feature map for fusion with the corresponding lowest resolution 3D feature volume (also: voxel grid). Each subsequent up-sampling step fuses a progressively higher resolution 2D feature map with a higher resolution 3D feature volume. This approach encourages the multi-scale 2D feature extractor network (e.g., the ViT-Adapter) 306 to produce distinct 2D feature maps at various granularities, tailored to the different scales of the 3D feature volumes. The multi-scale 2D feature extractor network (e.g., ViT-Adapter) 306 learns to extract these feature maps from a 2D vision foundation model (e.g., DINOv2 described in [11]) 304, whose weights are preferably frozen to prevent overfitting on the limited (in particular training) data available for 3D tasks.

Fig. 4 provides an exemplary visual overview of the NN system 300 architecture and method 100 performed according to the inventive technique.

In the example of Fig. 4, the input for generating the 3D feature volume of the scene (also: input to the pipeline) is a 3D point cloud 402 together with multi-view 2D images 404 with known camera calibrations. The output is a 3D feature volume (and/or voxel grid) 412, which can be used for various 3D (in particular perception) tasks such as (e.g., panoptic) segmentation or detection.

In the example of Fig. 4, the 3D encoder 309-E and the 3D decoder 309-D of a Minkowski U-Net as 3D backbone network 307 are both sparse. The example in Fig. 4 further shows a plurality of connections 410 between the encoder 309-E and the 3D decoder 309-D at different levels of spatial resolution. The connections 410 are in particular skip connections 410.

In Fig 4., the feature extraction module 305 comprises as 2D vision foundation model 304 a DINOv2 [11] 2D foundation model integrated into the pipeline via a ViT-Adapter [5] as multi-scale 2D feature extractor network 306. The ViT-Adapter 306 produces multi-scale 2D feature maps 406 for each input image 404. At the skip connections 410 of the 3D backbone network 307, each voxel's points are projected onto the (multi-view) 2D feature maps 406 at a specific scale. The corresponding 2D features are then averaged over all points in the voxel and concatenated channel-wise with the voxel's features. This procedure is performed in the example of Fig. 4 at every up-sampling block's skip-connection 410 in the decoder 309-D of the 3D backbone network 307. Only the lowest resolution 2D feature map is used for the lowest resolution 3D feature volume, and the highest resolution 2D feature map for the highest resolution 3D feature volume. Importantly, this allows the ViT-Adapter 306 to extract the appropriate 2D features for the different 3D feature scales, as opposed to having a single 2D feature map for all scales. During training, in this embodiment only the DINOv2 weights are frozen to prevent overfitting on the limited 3D data. The ViT-Adapter 306 in this embodiment learns to extract different 2D feature maps from DINOv2 304 for the different 3D scales at the skip-connections 410.

Preliminary results show that the inventive technique outperforms the state-of-the-art methods on the JRDB PanoTrack [8] and SemanticKITTI [3] datasets, and further results on the nuScenes [4] dataset are promising for panoptic segmentation when paired with a Mask3D [13] segmentation head to evaluate the performance of the 3D backbone.

| Table 1: Panoptic Quality (PQ) on the JRDB PanoTrack [8] dataset | |
|---|---|
| Method | PQ |
| Mask3D [13] (baseline) | 20.0 |
| Mask3D + DINOv2 ViT-g (frozen) | 34.1 |
| Mask3D + DINOv2 ViT-g (frozen) + ViT-Adapter (ADE20K pre-trained, frozen) | 38.0 |
| Mask3D + DINOv2 ViT-g (frozen) + ViT-Adapter (ADE20K pre-trained) | 43.6 |

Table 1 shows values of a panoptic quality (PQ) metric on the JRDB PanoTrack [8] dataset using essentially conventional methods in rows three and four and using the inventive technique in rows five and six, respectively. Concatenating single-scale DINOv2 [11] features at the skip-connections 410 of the 3D backbone network 307 already improves the performance of the Mask3D [13] baseline from 20.0 to 34.1 PQ. Using multi-scale features from the frozen ViT-Adapter 306 [5] (and/or pre-trained for segmentation in ADE20K [15]) further boosts the performance to 38.0 PQ. Finally, unfreezing the ViT-Adapter 306 yields another significant improvement to 43.6 PQ. It is noted that the ViT-Adapter 306 does not necessarily need to be pre-trained, but it is slightly beneficial for the performance.

While the embodiment of Fig. 4 is shown and tested for Dinov2 as 2D vision foundation model 304 and the ViT-Adapter as multi-scale 2D feature extractor network 306 as well a Minkowski U-Net as 3D backbone network 307, the inventive technique is not restricted thereto, but applies generally to (in particular 2D) feature extraction modules 305, 2D vision foundation models 304, multi-scale 2D feature extractor networks 306, and/or 3D backbones networks 307 other than the Minkowski U-Net.

The inventive technique makes use of injection S110 of multi-scale extracted features at multiple layers of a decoder 309-D with different special resolutions.

The inventive technique is set apart from conventional methods in that it uses a (in particular 2D) vision foundation model (VFM), which in an embodiment is DINOv2, instead of a conventional ResNet or ImageNet pre-trained ViT/Swin, as an (in particular 2D) feature extraction module 305. The VFM is preferably kept completely frozen, which advantageously prevents overfitting on comparatively tiny 3D datasets. The non-VFM (in particular 2D) backbones are not general enough to be used frozen, but will overfit on the small 3D datasets when finetuned. DINOv2 (and/or also, e.g., SigLIP [16]) is a very good general 2D (in particular single-level) feature extractor, even frozen, and doesn't need to be trained. Moreover, when trying to train it, it also immediately started overfitting.

Alternatively to learning multiple scales of spatial resolution from multi-view 2D image data, it is possible to use pooling, in particular max pooling, in 3D space to essentially "deterministically" generate multi-scale 3D feature maps, after obtaining the highest-resolution 3D feature map using the (in particular one and only) highest-resolution 2D feature map.

The inventive technique is clearly distinct from the prior art. E.g., Fig. 2 of [1], a point to voxel (p2v) feature extraction is shown. A main difference of the inventive technique for the injection part is that [1] uses a non-frozen ResNet50 (in particular instead of DINOv2 frozen according to the embodiment of Fig. 4 of the inventive technique), injects at multiple upsampling layers (in particular not at all upsampling layers), and adds more complexity, such as using a 3D backbone that is split up into a point-wise and a voxel-based branch, various point-to-voxel and voxel-to-point feature fusion operations in said 3D backbone, as well as different multilayer perceptrons (MLPs) for fusing visible and invisible 3D points (in particular instead of just element-wise addition and using zeros for invisible points according to the inventive technique) with image features. Furthermore, 4DFormer [1] uses only the highest-resolution image feature map when fusing LiDAR and image features as part of its multimodal feature extractor; only as part of an additional panoptic decoder in a later stage that deals with the concrete downstream task, it starts to utilize further (lower) scales of image features. By contrast to the prior art of 4DFormer, the inventive technique uses multiple (and/or varying, corresponding, and/or matching) 2D scales, which are, e.g., learned via a multi-scale 2D feature extractor network, such as a ViT adapter. On the other hand, in 4DFormer, lower-resolution 2D feature maps (e.g., I8) from the image encoder are only used in their transformer-based panoptic decoder, which is a separate (and/or additional) decoder used later in the pipleline for the downstream task at hand. I.e., the lower-resolution 2D features in 4DFormer are not fused with any 3D features in the initial multimodal encoder-decoder block.

Additionally, differently from the prior art of 4DFormer, according to the inventive technique preferably the 2D VFM is frozen (which advantageously avoids overfitting), and the multi-scale 2D feature extractor network (e.g., ViT adapter) has learned weights.

Alternatively or in addition, in Fig. 3 of [17], a Deep Multi-view Fusion (DMF)-Net is shown, where a 2D U-Net is trained from scratch. The features are fused only at the output (in particular not at different upsampling stages and/or intermediary layers) of the 3D backbone, and invisible points get their image features via k-NN from visible points.

A technique, denoted as DITR, which in particular uses max pooling as alternative to the learning of multiple scales of spatial resolution, is, e.g., around 4% better than the state-of-the-art DMF-Net, as shown in Table 2.

DITR in particular uses a frozen DINOv2 for extracting image features that correspond to points in a point cloud, subsequently projects the features to appropriate dimensions and injects them into the decoder of a 3D (in particular semantic) segmentation model using elementwise addition. The 3D segmentation model used in Table 2 is a Point Transformer V3, which is trained for segmentation.

**Table 2 shows that DITR outperforms (and/or has higher values of a performance metric than) the state-of-the art methods in nearly all cases, except for an about identical performance for validation (but not test, where DITR clearly does better) as the ODIN model on the ScanNet200 dataset and as the 2DPASS model on the Sem.KITTI dataset.**

| Table 2: Performance comparison between DITR and prior art 2D-3D fusion methods | | | | | | | | | | |
|---|---|---|---|---|---|---|---|---|---|---|
| Datase | ScanNet | | ScanNet2 | | S3 | nuScene | | Sem.KIT | | Way |
| Method | V | T | V | T | Are | V | T | V | T | Val |
| DVA | 7 | - | - | - | 67. | Evaluated only on indoor datasets. | | | | |
| BPNet | 7 | 7 | - | - | - | | | | | |
| DMF-N | 7 | 7 | - | - | - | | | | | |
| VMVF | 7 | 7 | - | - | - | | | | | |
| ODIN | 7 | 7 | **4** | 3 | 68. | | | | | |
| 4DForr | Evaluated only on outdoor datasets | | | | | 7 | 8 | 6 | - | - |
| 2DPAS | | | | | | 7 | 8 | **6** | 7 | - |
| MSeg3 | | | | | | 8 | 8 | 6 | - | 69.6 |
| LCPS | | | | | | 8 | 7 | 6 | 6 | - |
| DITR | **8** | **7** | 3 | **4** | **74.** | **8** | **8** | 6 | 7 | **73.3** |

Even better (or at least similar) performance improvements are expected when extracting features at multiple scales of spatial resolution from the multi-view 2D image data, in particular using a multi-scale 2D feature extractor network (such as the ViT Adapter), and injecting them into 3D backbone network decoder layers with corresponding scales according to the inventive technique, and/or when performing different downstream perception tasks.

For indoor scenarios, such as ScanNet (reconstructed scan from RGB-D video), there are fewer works that make use of images. Most of them are much more complicated or require additional training data. BPNet [18] seems to be the closest to the inventive technique at first glance, but is more complicated: BPNet requires both 2D and 3D supervision (e.g., the loss term in eq. (6) in [18] is composed of both a 2D and a 3D cross-entropy loss), whereas the inventive technique requires only a 3D supervision signal. It is noted that, e.g., for *sparse* LiDAR 3D data, it is not straightforward to obtain a *dense* 2D supervision signal from 3D, e.g., for pixel-wise segmentation tasks. Furthermore, BPNet uses BPM modules, which perform a bidirectional projection (including explicit occlusion handling via an additional link matrix). This bidirectional projection would prevent the BPNet from using a *frozen* 2D VFM as 2D image feature extractor, as the explicit goal of said additional direction is to train also the 2D backbone. Instead, the inventive technique is unidirectional (from 2D to 3D), which allows use a powerful, large-scale 2D VFM with frozen weights to prevent overfitting. Alternatively or in addition, the inventive technique does not (or does not need to) perform occlusion handling. Experiments have shown that occlusion handling in the context of the inventive technique does not make much of a difference (in particular in view of a quality of a result, while increasing complexity of the technique). This might be related to the fact that, on sparser point clouds, as opposed to dense 3D meshes, point-wise occlusion plays less of a role.

For indoor data, according to the inventive technique, (in particular only) a small number, e.g. ten (10), random camera views may be subsampled during training and (in particular only) a small number, e.g. ten (10), temporally equally spaced views during testing. The incomplete camera coverage during training, according to the inventive technique, turns out to make the model robust against camera dropout and/or camera failure. In the extreme case, no images are fed in at all, and the model still performs on par with the version that was trained on points only.

According to some embodiments of the inventive technique, the feature extraction module (and/or VFM backbone) comprises a (in particular small) learned component, the multi-scale 2D feature extractor network, which in the embodiment of Fig. 4 is realized by ViT-Adapter 306. The learned multi-scale 2D feature extractor network (e.g., ViT-Adapter) 306 allows to slightly modulate the (e.g., VFM and/or multi-scale 2D) features without too much risk of overfitting. The learned multi-scale 2D feature extractor network (e.g., ViT-Adapter) 306 is particularly advantageous when using a Minkowski U-Net (U-Net with MinkowskiEngine) as 3D backbone network for performing, based on the 3D feature volume output of the Minkowski U-Net 307, panoptic segmentation as downstream perception task. The inventive technique can also be applied using, e.g., a Point Transformer V3 as 3D backbone network 307 for performing, based on the 3D feature volume output of the Point Transformer V3, semantic segmentation.

Using the multi-scale 2D feature extractor (e.g., the ViT-Adapter) 306, that can learn (also: can be trained for) different features for different resolutions, according to the inventive technique is to the best inventors' knowledge not known in the state of the art.

Alternatively to injecting 2D features into a 3D backbone network 307, distilling the VFM into the 3D backbone (and/or using VFM features as prediction targets) is used in [19]. The conventional distillation technique differs from the inventive technique in that the conventional technique picks one camera, then feeds only the 3D points that are visible from this camera into the network for distillation. In contrast, the inventive technique (e.g., always) used the full 3D point cloud and all (and/or at least multiple; also: many) cameras and computes the loss only for visible points, in particular points that have a VFM target. This is advantageous as the inputs will look the same during pretraining and fine-tuning.

The inventive technique further differs from the conventional distilling technique, which uses bilinear interpolation of VFM features to get more fine-grained pixel-wise features. According to the inventive technique, the features are not interpolated, because one needs to be careful with interpolating latents in feature space-this is by no means something that is well defined- especially when those features are frozen. Also, interpolating to pixel-level may just be an arbitrary finer resolution that has no relation to the 3D points (e.g., two 3D points may map to the same pixel).

The inventive technique further differs from the conventional distilling technique, which is only evaluated on outdoor datasets, and in particular LiDAR data. The inventive technique is applicable to both outdoor and indoor scenarios (such as reconstructed room scans), where there can be many hundred camera views per room (and/or RGB-D video). According to an embodiment, ten (10) random camera views are subsampled during training and ten (10) temporally equally spaced views are subsampled during testing.

The inventive technique further differs from the conventional distilling technique (e.g., of [19]) by using a different 3D backbone. Alternatively or in addition, the inventive technique outperforms the conventional distillation technique, at least in the performed test cases. E.g., in [19], Wafflelron (WI) [23] is used as 3D backbone. It is known to have inferior performance compared to Point Transformer V3 (PTv3), see e.g., Table 5 of [19] vs. Table 7 of [21]: NuScenes 78.7% vs 81.2%, SemanticKITTI 63.4% vs 72.3% for WI vs. PTv3).

The inventive technique is generally relevant to any project or product utilizing multi-modal (e.g., RGB + 3D data) perception, such as for autonomous driving applications, robotics, home automation, and/or 3D room planning.

Independently of the grammatical term usage, individuals with male, female or other gender identities are included within the term.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

Cited prior art, the content of which is included herein by reference
[1] Ali Athar, Enxu Li, Sergio Casas, and Raquel Urtasun. 4d-former: Multimodal 4d panoptic segmentation. CoRL, 2023.
[2] Xuyang Bai, Zeyu Hu, Xinge Zhu, Qingqiu Huang, Yilun Chen, Hongbo Fu, and Chiew-Lan Tai. Transfu- sion: Robust lidar-camera fusion for 3d object detec- tion with transformers. CVPR, 2022.
[3] J. Behley, M. Garbade, A. Milioto, J. Quenzel, S. Behnke, C. Stachniss, and J. Gall. SemanticKITTI: A Dataset for Semantic Scene Understanding of Li- DAR Sequences. In Proc. of the IEEE/CVF Interna- tional Conf. on Computer Vision (ICCV), 2019.
[4] Holger Caesar, Varun Bankiti, Alex H Lang, Sourabh Vora, Venice Erin Liong, Qiang Xu, Anush Krish- nan, Yu Pan, Giancarlo Baldan, and Oscar Beijbom. nuscenes: A multimodal dataset for autonomous driv- ing. In Proceedings of the IEEE/CVF conference on computer vision and pattern recognition, 2020.
[5] Zhe Chen, Yuchen Duan, Wenhai Wang, Junjun He, Tong Lu, Jifeng Dai, and Yu Qiao. Vision transformer adapter for dense predictions. ICLR, 2023.
[6] Kashyap Chitta, Aditya Prakash, Bernhard Jaeger, Zehao Yu, Katrin Renz, and Andreas Geiger. Trans- fuser: Imitation with transformer-based sensor fusion for autonomous driving. Pattern Analysis and Ma- chine Intelligence (PAMI), 2023.
[7] Christopher Choy, JunYoung Gwak, and Silvio Savarese. 4d spatio-temporal convnets: Minkowski convolutional neural networks. In Proceedings of the IEEE Conference on Computer Vision and Pattern Recognition, 2019.
[8] Duy Tho Le, Chenhui Gou, Stavya Datta, Hengcan Shi, Ian Reid, Jianfei Cai, and Hamid Rezatofighi. Jrdbpanotrack: An open-world panoptic segmenta- tion and tracking robotic dataset in crowded human environments. In Proceedings of the IEEE/CVF Con- ference on Computer Vision and Pattern Recognition, 2024.
[9] Jiale Li, Hang Dai, Hao Han, and Yong Ding. Mseg3d: Multi-modal 3d semantic segmentation for autonomous driving. In CVPR, pages 21694-21704, 2023.
[10] Zhijian Liu, Haotian Tang, Alexander Amini, Xingyu Yang, Huizi Mao, Daniela Rus, and Song Han. Bevfu- sion: Multi-task multi-sensor fusion with unified bird's- eye view representation. In IEEE International Con- ference on Robotics and Automation (ICRA), 2023.
[11] Maxime Oquab, Timothée Darcet, Theo Moutakanni, Huy V. Vo, Marc Szafraniec, Vasil Khalidov, Pierre Fernandez, Daniel Haziza, Francisco Massa, Alaaeldin El-Nouby, Russell Howes, Po-Yao Huang, Hu Xu, Vasu Sharma, Shang-Wen Li, Wojciech Galuba, Mike Rabbat, Mido Assran, Nicolas Ballas, Gabriel Syn- naeve, Ishan Misra, Herve Jegou, Julien Mairal, Patrick Labatut, Armand Joulin, and Piotr Bojanowski. Dinov2: Learning robust visual features without su-pervision, 2023.
[12] Olaf Ronneberger, Philipp Fischer, and Thomas Brox. U-Net: Convolutional Networks for Biomedical Image Segmentation. Springer International Publishing, 2015.
[13] Jonas Schult, Francis Engelmann, Alexander Her- mans, Or Litany, Siyu Tang, and Bastian Leibe. Mask3D: Mask Transformer for 3D Semantic Instance Segmentation. 2023.
[14] Zhiwei Zhang, Zhizhong Zhang, Qian Yu, Ran Yi, Yuan Xie, and Lizhuang Ma. Lidar-camera panoptic segmentation via geometry-consistent and semanticaware alignment. In Proceedings of the IEEE/CVF International Conference on Computer Vision (ICCV), 2023.
[15] Bolei Zhou, Hang Zhao, Xavier Puig, Sanja Fidler, Adela Barriuso, and Antonio Torralba. Scene pars- ing through ade20k dataset. In Proceedings of the IEEE Conference on Computer Vision and Pattern Recognition, 2017.
[16] Xiaohua Zhai and Basil Mustafa and Alexander Kolesnikov and Lucas Beyer. Sigmoid Loss for Language Image Pre-Training. arXiv: 2303.15343 [cs.CV] (2023).
[17] Chaolong Yang and Yuyao Yan and Weiguang Zhao and Jianan Ye and Xi Yang and Amir Hussain and Kaizhu Huang. Towards Deeper and Better Multi-view Feature Fusion for 3D Semantic Segmentation. arXiv: 2212.06682[cs.CV] (2022).
[18] Wenbo Hu and Hengshuang Zhao and Li Jiang and Jiaya Jia and Tien-Tsin Wong. Bidirectional Projection Network for Cross Dimension Scene Understanding. arXiv: 2103.14326 [cs.CV] (2021).
[19] Gilles Puy and Spyros Gidaris and Alexandre Boulch and Oriane Siméoni and Corentin Sautier and Patrick Pérez and Andrei Bursuc and Renaud Marlet. Three Pillars improving Vision Foundation Model Distillation for Lidar. arXiv: 2310.17504v2 [cs.CV] (2024).
[20] Xiaoyang Wu, Yixing Lao, Li Jiang, Xihui Liu, and Hengshuang Zhao. Point Transformer V2: Grouped Vector Attention and Partition-based Pooling. In NeurIPS, 2022.
[21] Xiaoyang Wu, Li Jiang, Peng-Shuai Wang, Zhijian Liu, Xihui Liu, Yu Qiao, Wanli Ouyang, Tong He, and Hengshuang Zhao. Point Transformer V3: Simpler, Faster, Stronger. In CVPR, 2024.
[22] Ashish Vaswani and Noam Shazeer and Niki Parmar and Jakob Uszkoreit and Llion Jones and Aidan N. Gomez and Lukasz Kaiser and Illia Polosukhin. Attention Is All You Need. arXiv:1706.03762v7[cs.CL] (2023)
[23] Puy, Gilles and Boulch, Alexandre and Marlet, Renaud. Using a Waffle Iron for Automotive Point Cloud Semantic Segmentation. Proceedings of the IEEE/CVF International Conference on Computer Vision (ICCV), pp. 3379-3389 (October 2023)

## Claims

1. Computer-implemented method (100) for outputting a 3D feature volume of a scenale, comprising the method steps of:
- Receiving (S102) multi-view two dimensional, 2D, image data of a scene;
- Extracting (S105) features at multiple scales of spatial resolution from the received (S102) multi-view 2D image data;
- Receiving (S108), at an input layer of a three-dimensional, 3D, backbone network, 3D point cloud data of the scene, wherein the 3D backbone network comprises an encoder and a decoder with connections at a plurality of scales of spatial resolution for extracting features from the 3D point cloud data;
- Injecting (S110), at multiple layers of the decoder and with corresponding scales of spatial resolution, the extracted (S105) features; and
- Outputting (S112), at an output layer of the 3D backbone network, a 3D feature volume of the scene based on the received (S108) 3D point cloud data and on the injected (S110) features.

2. Method (100) according to claim 1, wherein extracting (S105) features at multiple scales of spatial resolution from the received (S102) multi-view 2D image data comprises:
- Obtaining (S104), by a 2D vision foundation model, features comprised in the received (S102) multi-view 2D image data; and
- Extracting (S106), by a multi-scale 2D feature extractor network, the obtained (S104) features at multiple scales of spatial resolution.

3. Method (100) according to the directly preceding claim, wherein the 2D vision foundation model and/or its weights are frozen during training.

4. Method (100) according to claim 2 or 3, wherein the 2D vision foundation model comprises a DINO, in particular DINOv2, model; and/or wherein the multi-scale 2D feature extractor network comprises a vision transformer, ViT, adapter.

5. Method (100) according to any of the preceding claims, wherein the encoder and/or the decoder of the 3D backbone network is sparse;
wherein the connections at multiple scales of spatial resolution between the encoder and the decoder comprise skip connections; and/or wherein the 3D backbone network comprises a U-Net, in particular a Minkowski U-Net, and/or a Point Transformer.

6. Method (100) according to any of the preceding claims, further comprising the steps of:
- providing (S114) the 3D feature volume to a, in particular 3D, downstream perception task model;
- performing (S116) the downstream perception task in relation to the provided (S114) 3D feature volume; and
- outputting (S118) the result of the performed (S116) downstream perception task.

7. Method (100) according to the directly preceding claim, wherein the downstream perception task comprises at least one of:
- object detection; and/or
- segmentation, optionally wherein the segmentation comprises semantic segmentation, instance segmentation, and/or panoptic segmentation.

8. Method (100) according to any of the preceding claims, wherein the 3D point cloud data are obtained by means of at least one of:
- a LiDAR sensor;
- a radar sensor;
- an RGB-D camera;
- a stereoscopic imaging;
- a computer-aided design, CAD, model; and/or
- a thermal imaging.

9. Method (100) according to any of the preceding claims, wherein the multi-view 2D image data comprise:
- 2D images taken at different camera orientations, in particular using a moving camera to change camera orientations; and/or
- 2D images taken by multiple cameras at different locations and/or with different orientations.

10. Method (100) according to any of the preceding claims, wherein a camera calibration of one or more cameras, by which the received (S102) multi-view 2D image data are acquired, are known.

11. Method (100) according to any of the preceding claims, wherein the method (100) is performed locally on a computing device; and/or wherein at least some steps of the method (100) are performed in a computing cloud.

12. Use of the method (100) according to any of the preceding claims for training the 3D backbone network for 3D feature volume determining.

13. Computer-implemented method (200) for outputting a 3D feature volume of a scene, comprising the method steps of:
- Receiving (S108), at an input layer of a three-dimensional, 3D, backbone network, 3D point cloud data of a scene, wherein the 3D backbone network has been trained according to the method of anyone of claims 1 to 12; and
- Outputting (S212), at an output layer of the 3D backbone network, a 3D feature volume of the scene based on the received (S108) 3D point cloud data.

14. Neural network system (300) for outputting a 3D feature volume of a scene, comprising:
- A first interface (302), which is configured for receiving multi-view two dimensional, 2D, image data of a scene;
- A feature extraction module (305), which is configured for extracting features at multiple scales of spatial resolution from the received multi-view 2D image data; and
- A three-dimensional, 3D, backbone network (307) comprising:
∘ an input layer (308), which is configured for receiving 3D point cloud data of the scene;
∘ an encoder (309-E) and a decoder (309-D) with connections at a plurality of scales of spatial resolution for extracting features from the 3D point cloud data, wherein multiple layers of the decoder are configured for receiving an injection, with corresponding scales of spatial resolution, of the extracted features of the multi-view 2D image data; and
∘ an output layer (310), which is configured for outputting a 3D feature volume of the scene based on the received 3D point cloud data and injected features.

15. System for outputting a 3D feature volume of a scene, comprising:
- at least one optical sensor, in particular at least one camera, which is configured for acquiring multi-view two dimensional, 2D, image data of a scene;
- at least one sensor, which is configured for acquiring 3D point cloud data of the scene; and
- a neural network system (300) according to the directly preceding claim, wherein the first interface (302) is configured for receiving the multi-view 2D image data from the at least one optical sensor, and wherein the input layer (308) is configured for receiving the 3D point cloud data.

## Amended claims

### Amended claims in accordance with Rule 137(2) EPC.

1. Computer-implemented method (100) for outputting a 3D feature volume of a scene, comprising the method steps of:
- Receiving (S102) multi-view two dimensional, 2D, image data of a scene;
- Extracting (S105) features at multiple scales of spatial resolution from the received (S102) multi-view 2D image data;
- Receiving (S108), at an input layer of a three-dimensional, 3D, backbone network, 3D point cloud data of the scene, wherein the 3D backbone network comprises an encoder and a decoder with connections at a plurality of scales of spatial resolution for extracting features from the 3D point cloud data;
- Injecting (S110), at multiple layers of the decoder and with corresponding scales of spatial resolution, the extracted (S105) features; and
- Outputting (S112), at an output layer of the 3D backbone network, a 3D feature volume of the scene based on the received (S108) 3D point cloud data and on the injected (S110) features.

2. Method (100) according to claim 1, wherein extracting (S105) features at multiple scales of spatial resolution from the received (S102) multi-view 2D image data comprises:
- Obtaining (S104), by a 2D vision foundation model, features comprised in the received (S102) multi-view 2D image data; and
- Extracting (S106), by a multi-scale 2D feature extractor network, the obtained (S104) features at multiple scales of spatial resolution.

3. Method (100) according to the directly preceding claim, wherein the 2D vision foundation model and/or its weights are frozen during training.

4. Method (100) according to claim 2 or 3, wherein the 2D vision foundation model comprises a DINO, in particular DINOv2, model; and/or wherein the multi-scale 2D feature extractor network comprises a vision transformer, ViT, adapter.

5. Method (100) according to any of the preceding claims, wherein the encoder and/or the decoder of the 3D backbone network is sparse;
wherein the connections at multiple scales of spatial resolution between the encoder and the decoder comprise skip connections; and/or
wherein the 3D backbone network comprises a U-Net, in particular a Minkowski U-Net, and/or a Point Transformer.

6. Method (100) according to any of the preceding claims, further comprising the steps of:
- providing (S114) the 3D feature volume to a, in particular 3D, downstream perception task model;
- performing (S116) the downstream perception task in relation to the provided (S114) 3D feature volume; and
- outputting (S118) the result of the performed (S116) downstream perception task.

7. Method (100) according to the directly preceding claim, wherein the downstream perception task comprises at least one of:
- object detection; and/or
- segmentation, optionally wherein the segmentation comprises semantic segmentation, instance segmentation, and/or panoptic segmentation.

8. Method (100) according to any of the preceding claims, wherein the 3D point cloud data are obtained by means of at least one of:
- a LiDAR sensor;
- a radar sensor;
- an RGB-D camera;
- a stereoscopic imaging;
- a computer-aided design, CAD, model; and/or
- a thermal imaging.

9. Method (100) according to any of the preceding claims, wherein the multi-view 2D image data comprise:
- 2D images taken at different camera orientations, in particular using a moving camera to change camera orientations; and/or
- 2D images taken by multiple cameras at different locations and/or with different orientations.

10. Method (100) according to any of the preceding claims, wherein a camera calibration of one or more cameras, by which the received (S102) multi-view 2D image data are acquired, are known.

11. Method (100) according to any of the preceding claims, wherein the method (100) is performed locally on a computing device; and/or wherein at least some steps of the method (100) are performed in a computing cloud.

12. Use of the method (100) according to any of the preceding claims for training the 3D backbone network for 3D feature volume determining.

13. Computer-implemented method (200) for outputting a 3D feature volume of a scene, comprising the method steps of:
- Receiving (S108), at an input layer of a three-dimensional, 3D, backbone network, 3D point cloud data of a scene, wherein the 3D backbone network has been trained according to the method of anyone of claims 1 to 12; and
- Outputting (S212), at an output layer of the 3D backbone network, a 3D feature volume of the scene based on the received (S108) 3D point cloud data.

14. Neural network system (300) for outputting a 3D feature volume of a scene, comprising:
- A first interface (302), which is configured for receiving multi-view two dimensional, 2D, image data of a scene;
- A feature extraction module (305), which is configured for extracting features at multiple scales of spatial resolution from the received multi-view 2D image data; and
- A three-dimensional, 3D, backbone network (307) comprising:
∘ an input layer (308), which is configured for receiving 3D point cloud data of the scene;
∘ an encoder (309-E) and a decoder (309-D) with connections at a plurality of scales of spatial resolution for extracting features from the 3D point cloud data, wherein multiple layers of the decoder are configured for receiving an injection, with corresponding scales of spatial resolution, of the extracted features of the multi-view 2D image data; and
∘ an output layer (310), which is configured for outputting a 3D feature volume of the scene based on the received 3D point cloud data and injected features.

15. System for outputting a 3D feature volume of a scene, comprising:
- at least one optical sensor, in particular at least one camera, which is configured for acquiring multi-view two dimensional, 2D, image data of a scene;
- at least one sensor, which is configured for acquiring 3D point cloud data of the scene; and
- a neural network system (300) according to the directly preceding claim,
wherein the first interface (302) is configured for receiving the multi-view 2D image data from the at least one optical sensor, and wherein the input layer (308) is configured for receiving the 3D point cloud data.
